# EUROPÄISCHE PATENTSCHRIFT

(11) **EP 0 503 434 B1**
(45) Veröffentlichungstag und Bekanntmachung des Hinweises auf die Patenterteilung: **28.02.1996**
(21) Anmeldenummer: 92103576.2
(22) Anmeldetag: 02.03.1992
(51) Int. Cl.: H04B 1/38, B60R 11/02

(54) **Funkgerät, insbesondere Autofunkgerät**
Radio transceiver, in particular for car
Emetteur-recepteur, particulièrement pour automobiles

(30) Priorität: 12.03.1991 DE 9102943 U
(43) Veröffentlichungstag der Anmeldung: 16.09.1992
(73) Patentinhaber: SIEMENS AKTIENGESELLSCHAFT, D-80333 München (DE)
(72) Erfinder: Thomfohrde, Heiner, W-8044 Unterschleissheim (DE); Hackbarth, Andreas, Dipl.-Des., W-8000 München 80 (DE); Dafcik, Juan, Dipl.-Ing., W-8000 München 82 (DE)

(56) Entgegenhaltungen:
- EP-A- 0 203 882
- EP-A- 0 276 403
- EP-A- 0 280 997
- DE-U- 8 905 152

## Beschreibung

Die Erfindung bezieht sich auf ein Funkgerät, insbesondere Autofunkgerät, bei dem ein in Längsschnitt L-förmiger Rahmen vorgesehen ist und auf dem längeren, in Normalstellung horizontal verlaufenden Schenkel des L die Auflage für den Handsprechapparat und in den Innenraum des L-Profils der Sendeempfänger durch Verrastung mit dem längeren Schenkel des L-Profils einsteckbar ist.

Für eine derartige Einrichtung, wie sie beispielsweise durch das DE-GM 89 05 152.1 bekannt ist, soll die Funktionsfähigkeit des Kartenlesers auf einfache Weise für verschiedene Kartenformate ermöglicht werden.

Diese Aufgabe wird bei einem Funkgerät der eingangs genannten Art gemäß der Erfindung durch die im Anspruch angegebenen Merkmale gelöst.

Nachstehend wird die Erfindung anhand von in den Figuren dargestellten Ausführungsbeispielen näher erläutert.

Die Figuren zeigen im einzelnen:

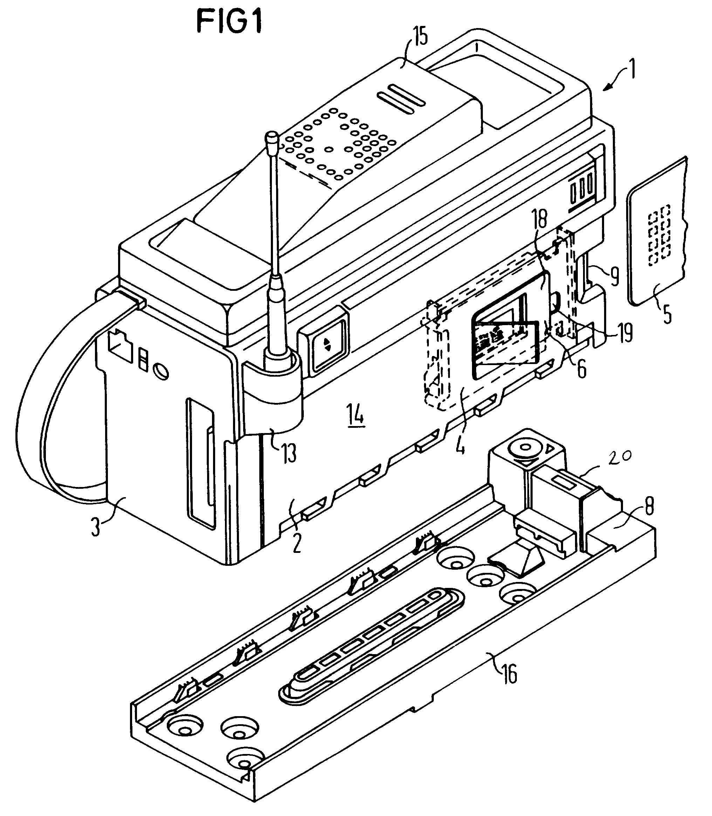

- Die Figur 1: in Perspektive ein sogenanntes Autofunkgerät mit Befestigungseinheit und integriertem Kartenleser,
- die Figur 2: einen Adapter zur Aufnahme einer normalen Chip-Karte,
die Figur 3 einen Adapter zur Aufnahme einer SIM-Karte.

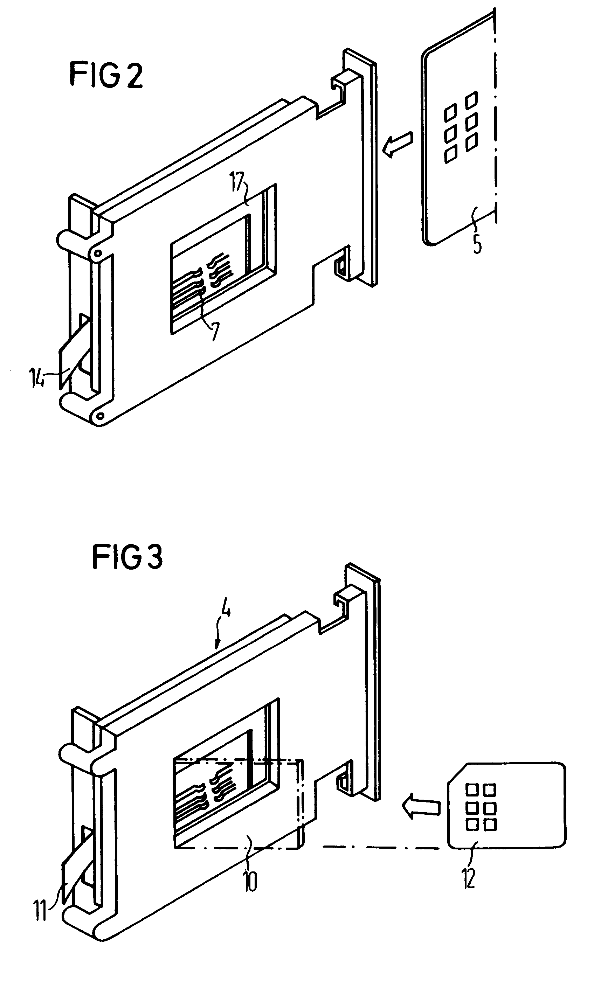

Neuerdings werden nicht nur normale, relativ große Chip-Karten als Identitätskarten für die Bedienung von Autotelefonen verwendet, sondern auch relativ kleine, sogenannte SIM-Karten (Subdrive Identify Module). Für ein bereits vorhandenes an sich bekanntes Funkgerät gemäß dem deutschen Gebrauchsmuster 89 05 1523.1 wird ein Zusatzadapter für jeweils eine dieser Arten von Identitätskarten vorgeschlagen. Dieser Adapter 4 ist in eine Seitenwand des Sendeempfängers 2 am Ende eingebaut. Das Funkgerät besteht aus einem in Seitenansicht L-förmigen Gehäuseoberteil 3 mit Auflage 15 für den Handapparat. In das Innere des L-förmigen Gehäuseoberteils ist der eigentliche Sendeempfänger 2 eingerastet. Dieses gesamte Funkgerät 1 ist für die Verwendung im Automobil wiederum in einen Grundkörper 16 einrastbar, der als Befestigungseinheit im Auto dient. Mittels einer Vorrichtung, die über eine Taste 20 entsperrt werden kann, sitzt das Funkgerät in diesem Fall fest im Grundkörper. Auf der Seite der Wand 14 des Sendeempfängers 2, auf der sich am anderen Ende die Antenne 13 befindet, ist der Adapter 4 für die Identitätskarte im Inneren angeordnet. Für die Aufnahme einer normalen Identitätskarte 5 ist diese von einer Ecke des Gehäuses her, an der sich eine Griffmulde 9 befindet, einschiebbar. Bei dieser Ausführung des Chip-Kartenlesers ist der an sich vorgesehene Ausschnitt 17 (Figur 2) durch die Seitenwand 14 abgedeckt.

Für die Aufnahme einer SIM-Karte hat diese Seitenwand eine Öffnung (Ausschnitt 18 in der Seitenwand 14), durch die eine Klappe 10 für das SIM-Kartenfach 6 hindurchgreifen kann. Zum Öffnen der Klappe ist eine Fingermulde 19 an der Seitenwand vorgesehen und nach Einlegen der SIM-Karte 12 läßt sich diese Klappe 10 verrastbar schließen. Diese Art des Chip-Kartenlesers für SIM-Karten ist in der Figur 3 dargestellt.

Für beide Arten von Karten sind jedoch im Adapter 4 die gleichen Kontakte 7 vorgesehen, die über eine Verdrahtung 11 mit der Bedieneinheit des Funkgerätes verbunden sind. Der Adapter ist jedoch so ausgebildet, daß es nicht möglich ist, eine SIM-Karte und eine normale Identitätskarte gleichzeitig einzuschieben, das heißt, das Vorderteil des Kartenlesers ist entsprechend ausgebildet, so daß eine gegenseitige Sperrung erreicht wird.

Um das vordere untere Eck in den normalerweise dort mit der Verriegelungseinheit versehenen Grundkörper 16 unterzubringen, ist in diesem Grundkörper ein freier Raum 8 geschaffen.

Es ist bei Verwendung dieses Adapters eine leichte Umstellung auf das jeweilige Chip-Kartenformat mit wenigen Handgriffen möglich, da der Adapter lediglich an der Seitenwand verschraubt werden braucht.

## Patentansprüche

1. Funkgerät, insbesondere Autofunkgerät, bei dem ein in Längsschnitt L-förmiger Rahmen (3) vorgesehen ist und auf dem längeren, in Normalstellung horizontal verlaufenden Schenkel des L die Auflage (15) für den Handsprechapparat und in den Innenraum des L-Profils der Sendeempfänger (2) durch Verrastung mit dem längeren Schenkel des L-Profils einsteckbar ist,
**dadurch gekennzeichnet**,
daß in einer Seitenwand (14) des Sendeempfängers (2) ein Fach als Adapter (4) für die wahlweise Aufnahme einer normalen Identitätskarte (5) oder einer sogenannten SIM (Subdriver Identify Module) Karte (12) derart ausgebildet ist, daß die normale Identitätskarte (5) von der Längsseite der Seitenwand (14) des Sendeempfängers (2) einschiebbar ist, und daß der Adapter (4) für die Aufnahme der SIM-Karte (12) einen Ausschnitt (17) hat, der mit einer Klappe (10) verschließbar ist, die durch einen weiteren Ausschnitt (18) in der Seitenwand (14) hindurch über eine Fingermulde (19) bedienbar ist, wobei die Kontakte (7) für beide Kartenarten gleich sind, jedoch das Adapterfach eine mechanische Sperre für die Aufnahme einer normalen Karte (5) für den Fall hat, in welchem der Adapter zur Aufnahme einer SIM-Karte ausgeführt ist und umgekehrt.

## Claims

1. Radio transceiver, in particular car radio transceiver, in which there is provided a frame (3) which is L-shaped in the longitudinal section, and the support (15) for the handset is provided on the longer leg of the L which runs horizontally in the normal position, and the transceiver (2) can be inserted into the interior of the L-profile by latching with the longer leg of the L-profile, characterized in that a compartment is formed, as an adapter (4) for the optional accommodation of a normal identity card (5) or a so-called SIM (Subscriber Identity Module) card (12), in a side wall (14) of the transceiver (2) in such a way that the normal identity card (5) can be pushed in from the long side of the side wall (14) of the transceiver (2), and in that the adapter (4) for the accommodation of the SIM card (12) has a cutout (17) which can be closed off by a flap (10) which can be operated through a further cutout (18) in the side wall (14) by means of a finger recess (19), the contacts (7) being the same for both types of card, but the adapter compartment having a mechanical barrier to the accommodation of a normal card (5) in the event that the adapter is designed to accommodate a SIM card, and vice versa.

## Revendications

1. Appareil radio, notamment appareil radio pour automobile, dans lequel est prévu un cadre (3) en forme de L en coupe longitudinale, le support (15) du combiné pouvant être emmanché sur la branche du L la plus longue qui s'étend horizontalement en position normale, et l'appareil (2) émetteur-récepteur dans la partie intérieure du profil en L par encliquetage avec la branche la plus longue du L,
caractérisé en ce que
dans une paroi (14) latérale de l'appareil (2) émetteur-récepteur, il est formé un compartiment en tant qu'adaptateur (4) pour la réception au choix d'une carte (5) d'identification normale ou d'une carte (12) dénommée SIM (Subdriver Identity Module) de sorte que, la carte (5) d'identification normale puisse être insérée du grand côté de la paroi (14) latérale de l'appareil (2) d'émission-réception, et en ce que l'adaptateur (4) comporte une découpe (17) pour recevoir la carte (12) SIM, cette découpe (17) pouvant être fermée par un volet (10), volet qui peut être manoeuvré par l'intermédiaire d'une empreinte (19) pour un doigt en passant par une autre découpe (18) de la paroi (14) latérale, les contacts pour les deux types de carte étant identiques, cependant que le compartiment adaptateur a un organe d'arrêt l'empêchant de recevoir une carte (5) normale dans le cas où l'adaptateur sert à la réception d'une carte SIM et inversement.
